Europäisches Patentamt

European Patent Office

Office européen des brevets

(11) Veröffentlichungsnummer: **0 529 111 B1**

(12) **EUROPÄISCHE PATENTSCHRIFT**

(45) Veröffentlichungstag der Patentschrift: **07.12.94**

(51) Int. Cl.5: **B01D 35/10**, B01D 39/08, B01D 39/14, B01D 39/18

(21) Anmeldenummer: **91113963.2**

(22) Anmeldetag: **21.08.91**

(54) **Filtermedium.**

(43) Veröffentlichungstag der Anmeldung:
**03.03.93 Patentblatt  93/09**

(45) Bekanntmachung des Hinweises auf die
Patenterteilung:
**07.12.94 Patentblatt  94/49**

(84) Benannte Vertragsstaaten:
**AT BE CH DE DK ES FR GB GR IT LI LU NL SE**

(56) Entgegenhaltungen:
**EP-A- 0 036 031**
**DE-A- 1 482 474**
**FR-A- 1 574 004**
**GB-A- 2 023 017**
**US-A- 1 833 315**

(73) Patentinhaber: **J.C. Binzer Papierfabrik GmbH
& Co. KG
Berleburger Strasse 71
D-35116 Hatzfeld (DE)**

(72) Erfinder: **Binzer, Jürgen Carl
Hermann-Löns-Strasse 1
W-3559 Hatzfeld 1 (DE)**
Erfinder: **Plohnke, Kurt, Dr.
Eichendorffstrasse 42
W-3559 Hatzfeld 1 (DE)**
Erfinder: **Jeide, Günter
Am Ring 6
W-3559 Hatzfeld 2 (DE)**

(74) Vertreter: **Olbricht, Karl Heinrich, Dipl.-Phys.
Patentanwalt Karl Olbricht,
Postfach 11 43
D-35095 Weimar (DE)**

## Beschreibung

Die vorliegende Erfindung betrifft ein Filtermedium zur verfahrenstechnischen Filtration.

Anwendung finden Filtermedien bei der Filtration strömender Medien, also von Gasen und Flüssigkeiten. Bekannte Filter haben ein Zuweilen eng begrenztes Schmutzspeichervermögen. Durchströmt man Filter mit verunreinigtem Medium, so werden vorhandene Partikel je nach Abscheidevermögen des Filters auf der Filteroberfläche oder auch im Inneren des Filters zurückgehalten. Mit zunehmender Schmutzablagerung wächst der Durchgangswiderstand des Filters, bis ein Grenzwert erreicht ist, bei dem das Filter entweder abgereinigt oder ausgetauscht werden muß.

Die Zeitdauer bis zum Erreichen bzw. Überschreiten des Grenzwertes, die Standzeit, hängt von vielen Parametern ab, z.B. von der Partikelbeschaffenheit und -konzentration, von der Filterfläche sowie -geometrie, der Anströmgeschwindigkeit und insbesondere vom spezifischen Schmutzspeichervermögen des Filtermediums. Im Falle von Staub versteht man darunter die flächenbezogene Menge eines definierten Teststaubes, die das Filtermedium aufzunehmen vermag, bis ein begrenzender Differenzdruck erreicht ist. Herkömmliche Filter setzen sich nicht selten rasch dicht, so daß die erforderlichen Wartungsarbeiten in verhältnismäßig kurzen Zeitabständen durchgeführt werden müssen, was einen recht großen Aufwand bedeutet.

Es ist ein wichtiges Ziel der Erfindung, eine verbesserte Filtration mit möglichst einfachen und wirtschaftlichen Mitteln zu bewirken. Angestrebt wird die Schaffung eines Filtermediums solcher Ausbildung, daß das Schmutzspeichervermögen erheblich besser ist als bei herkömmlichen Filtern. Ferner soll sich das neuartige Filter auf kostengünstige Weise mit reproduzierbar vorteilhaften Eigenschaften herstellen lassen.

Die Erfindung sieht gemäß Anspruch 1 ein Filtermedium zur verfahrenstechnischen Filtration mit einem porösen Substrat vorgegebener Abscheideleistung vor, nämlich einem porösen Träger vorgegebener Gestalt, der mit einem Flock beschichtet ist und ein Hauptfilter bildet, dem der Flock anströmseitig als Vorfilter vorgeordnet ist, wobei der Träger mit Flockinseln nach einem Raster derart beschichtet ist, daß sich Fasern benachbarter Flockinseln noch überlappen, zwischen letzteren jedoch nicht oder wenig beflockte Trägerflächen vorhanden sind. Diese neuartige Ausbildung gewährleistet mit minimalem Aufwand ein überaus effektives Filtermedium, das sich in vielfältigster Weise einsetzen läßt, und zwar sowohl bei gasförmigen als auch bei flüssigen bzw. fließfähigen Strömungen. Durch den Flock wird ein frühzeitiges Dichtsetzen verhindert, so daß sich lange Standzeiten ergeben. Es hat sich überraschend gezeigt, daß ein solches Filtermedium im Vergleich zu sonst gleichartigen, unbeflockten Filtermedien und bei gleichem Grenzdifferenzdruck ein Mehrfaches an Schmutz, z.B. Staub aus Luft oder anderen Gasen, aufnehmen kann. Trotz des stark gesteigerten spezifischen Schmutzspeichervermögens wird dabei der Durchgangswiderstand gegenüber unbeflockten Filtermedien nicht nennenswert verändert.

Beflockte Filtermedien sind an sich beispielsweise aus der EP-A2-0 136 605 bekannt, wonach man einen Träger mit Kohlenstoffasern elektrostatisch beschichtet. Dabei werden die sehr kurzen Fasern in gleichmäßiger Beflockung senkrecht zur Träger-Klebefläche an ihr befestigt und außen bevorzugt mit einer Deckschicht versehen, um einen Faserabrieb zu verhindern. Es liegt auf der Hand, daß ein solches Medium kaum für Filterzwecke geeignet ist; Anwendung findet es namentlich auf dem Gebiet der Schutzkleidung.

Hiervon unterscheidet sich die Erfindung sehr vorteilhaft durch die neuartige Raster-Beflockung, die bei hoher Durchlässigkeit eine gute, zweistufige Filterung mit langen Standzeiten sicherstellt. Weil die Anströmung auf der beflockten Seite erfolgt, ergibt sich im Betrieb fortlaufend eine Filterkuchen-Lockerung, die maßgeblich zu vielseitiger Verwendbarkeit beiträgt. Beispielsweise können solche Filtermedien vor allem auch zur Gasfiltration eingesetzt werden, etwa in der Kraftfahrzeugtechnik für Luft- und Kabinenfilter, als abreinigbare Entstaubungsfilter und auch als Staubsaugereinsatz.

Günstig ist es ferner, wenn gemäß Anspruch 2 der Träger ein Filterpapier, Filtervlies oder Gewebe ist. Derartige Träger stehen in reichhaltiger Auswahl zur Verfügung, so daß eine wirtschaftliche Fertigung unterschiedlicher Filter problemlos durchführbar ist.

Das spezifische Schmutzspeichervermögen kann durch Wahl der Beflockungsparameter gesteuert werden. Unterschiedliche Schmutzaufnahme erhält man je nach Rasterart sowie Größe und Anzahl der Rasterpunkte bzw. Flockinseln, ferner durch bestimmte Faser-Bemessung. In den Ansprüchen 3 bis 6 sind wesentliche Parameter-Bereiche einschließlich bevorzugter Bemessungen angegeben. Bezeichnet a den Mittenabstand der Flockinseln, $\ell$ die freie Faserlänge und d den Kerndurchmesser, welcher im wesentlichen von der Rasterpunkt-Kleberfläche eingenommen wird, so gilt insbesondere die in Anspruch 7 formulierte Beziehung

$$a \leq d + 2\,\ell.$$

Zweckmäßig sind namentlich dünne und längere Flockfasern. Allerdings bietet die Beflockung mit langen Fasern technische Schwierigkeiten, und wenn die Faserlänge wesentlich größer als der halbe Rasterabstand wird, ist eine Beeinträchtigung der Schmutzaufnahme durch die entstandenen Überlappungen meßbar.

Schutz wird auch für das Merkmal von Anspruch 8 geltend gemacht, wonach die Flockinseln einen igelähnlichen Aufbau derart haben, daß die Fasern von einer erhabenen Kleberfläche in Raumwinkel-Verteilung abstehen. Dies ist ein wesentlicher Unterschied zur herkömmlichen Beflockung etwa gemäß EP-A2-0 136 605 oder EP-B1-0 139 901, wo die Flockfasern stets senkrecht zur ebenen Trägerfläche elektrostatisch eingeschossen werden. Anspruch 9 sieht speziell vor, daß die erhabene Kleberfläche jeder Flockinsel die Grundgestalt einer Kugelkalotte hat, von der die Fasern im wesentlichen radial abstehen. Es überlappen sich daher nur manche Flockfasern am Rand jeder Insel, während andere ähnlich einer gewölbten Bürste in verschiedene Richtungen nach oben bzw. außen zeigen.

Ferner ist erfindungsgemäß vorgesehen, daß das Raster der Flockinseln im Einklang mit Anspruch 10 von zwei oder mehr sich kreuzenden Scharen abstandsgleicher Linien gebildet ist, insbesondere von sich rechtwinkelig schneidenden Parallelen. Das ist technisch verhältnismäßig einfach zu realisieren und führt zu einem sehr effektiven Filtermedium.

Günstig ist es weiterhin, wenn die Flock-Fasern laut Anspruch 11 aus weichelastischem Material bestehen, z.B. aus Zellwolle, Kunststoff wie Polyamid, Polypropylen, Polyethylenterephthalat u.dgl. Infolgedessen ist nicht nur eine gewisse Elastizität der Beschichtung gegeben, sondern auch die Abreinigung des Filtermediums erleichtert, weil die Fasern dank ihrer Beweglichkeit ein Lockern und Abschütteln des Schmutzkuchens fördern.

Weitere Merkmale, Einzelheiten und Vorteile der Erfindung ergeben sich aus dem Wortlaut der Ansprüche und der folgenden Beschreibung von Ausführungsbeispielen anhand der Zeichnung. Darin zeigen:

Fig. 1     eine schematisierte und vergrößerte Teil-Draufsicht auf eine Flockinsel-Anordnung,

Fig. 2     eine Schnittansicht eines Filtermediums entsprechend der Schnittebene II-II in Fig. 1,

Fig. 3     eine vergrößerte Draufsicht auf ein Filtermedium,

Fig. 4 bis 7     je ein Zeitdiagramm des Differenzdrucks verschiedener Filtermedien bei Beladung mit einheitlichem Teststaub und

Fig. 8     eine Teil-Schnittansicht eines Faltenbalgfilters.

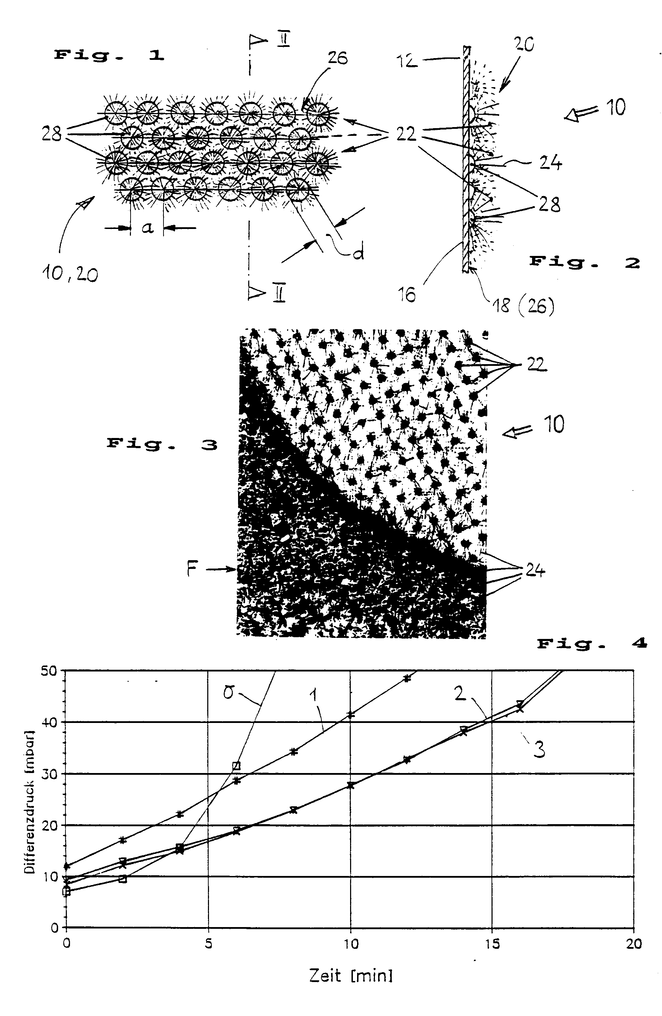

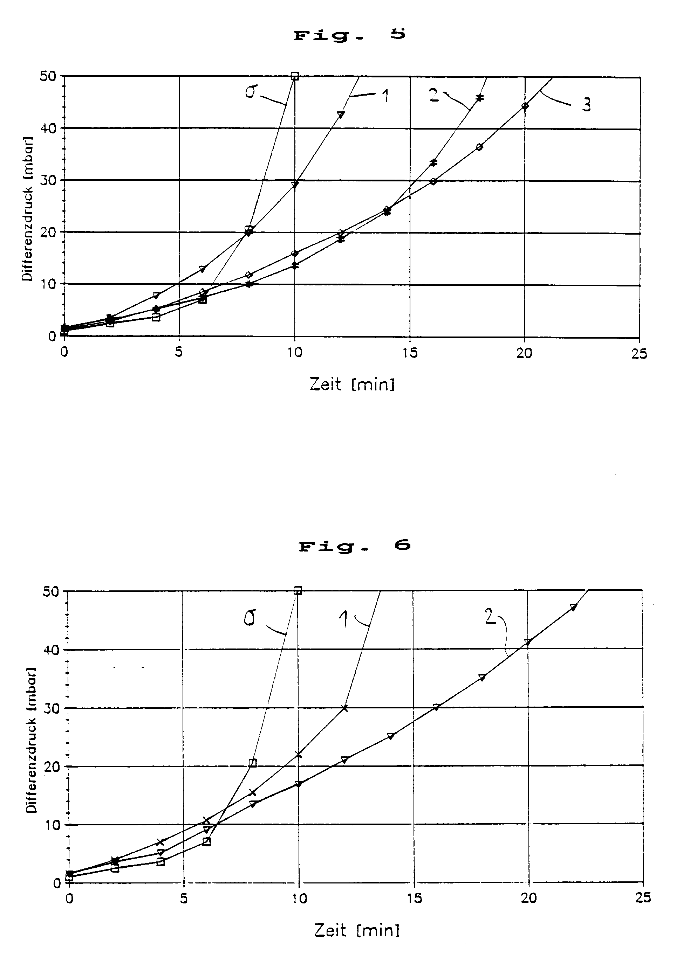

In Fig. 1 ist ein Filtermedium 10 veranschaulicht, das einseitig einen Flock 20 in Form von Flockinseln 22 trägt, deren tatsächliche Gestalt von den gezeichneten Kreisen abweichen kann; Drei- oder Mehrecke, Quadrate, Rauten usw. kommen ebenfalls in Betracht. Gemäß Fig. 2 ist der Flock 20 auf einem Träger 12 angebracht, der ein poröses Filterpapier, Filtervlies oder Gewebe sein kann. Die Flockinseln 22 bestehen aus mit Fasern 24 beschichteten Kleberinseln 28 und sind allgemein igelähnlich. Die Fasern 24 stehen im wesentlichen radial in einer Raumwinkel-Verteilung von der Oberfläche jeder Kleberinsel 28 ab, welche erhaben, z.B. kugelkalottenförmig sein kann. Für die Kleberflächen 28 eignen sich wärmebeständige Dispersionskleber, beispielsweise Acrylatkleber.

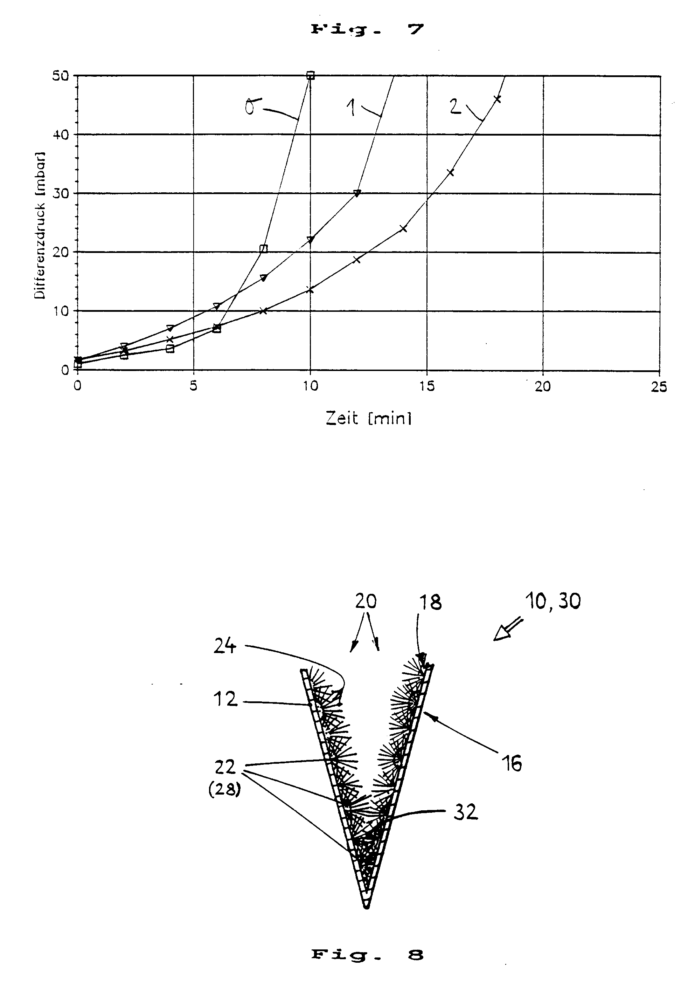

Dank relativ dichter Raster-Anordnung der Flockinseln 22 überlappen sich die Enden benachbarter Fasern 24 teilweise noch, während darunter bzw. dazwischen kleberfreie Trägerflächen 26 vorhanden sind. Das in Fig. 1 gezeigte Raster, bei dem sich drei Scharen von Parallelen unter 60° durchdringen, weicht ab von jenem der Fig. 3, wo zwei sich unter 90° kreuzende Scharen von Parallelen die Rasterpunkte bzw. Flockinseln 22 bilden. Man ersieht aus Fig. 3 außerdem einen Teil eines Filterkuchens F mit ihn einzeln oder im Bündel durchbrechenden Fasern 24, deren Beweglichkeit fortlaufend für ausreichende Durchströmbarkeit des Filters sorgt.

Für das Schmutzspeichervermögen des Filtermediums 10 sind außer der Rasterart und -größe vor allem die Fasern 24 des Flocks 20 wesentlich. Bevorzugt beträgt der Mittenabstand a der Flockinseln 22 voneinander zwischen 0,8 mm und 5,5 mm; ihr mittlerer Kerndurchmesser kann etwa im Bereich von 0,3 mm bis 2,5 mm, vorzugsweise bei 2,0 mm liegen. Günstig ist es, wenn der Mittenabstand a der Flockinseln 22 voneinander etwa das 1,5fache des mittleren Kerndurchmessers d ausmacht. Als besonders vorteilhaft haben sich Flock-Faserstärken im Bereich von 0,5 dtex bis 10 dtex und Flock-Faserlängen ℓ im Bereich von 0,3 mm bis 3,0 mm erwiesen, wobei wiederum Faserfeinheiten zwischen 1 dtex und 7 dtex sowie Faserlängen zwischen 0,5 mm und 1,5 mm für besonders wirksame Filterung zu bevorzugen sind.

Fig. 4 zeigt den Einfluß der Faserarten des beflockten Materials auf die Standzeit des Filtermediums 10. Im Vergleich zu unbeflocktem Filterpapier (Kurve 0) ist bei Beflockung mit Polyethylenterephthalat (Kurve 1) bereits eine wesentlich längere Standzeit erzielt. Die Beflockung mit Polyamidfasern (Kurve 2) und mit Zellwollfasern (Kurve 3) ergibt bei gleicher Staubkonzentration eine jeweils noch längere Standzeit. Es wurden einheitliche Faserfeinheiten von 3,3 dtex und einheitliche Faserlängen von 0,5 mm für die Beflockung verwendet. Der benutzte Teststaub der Bezeichnung AG fine hat eine logarithmisch etwa gleichförmige Korngrößenverteilung im Bereich unterhalb 80 $\mu$m mit einem Anteil von knapp 40 % unterhalb 5 $\mu$m.

Den Einfluß der Faserlänge zeigt Fig. 5.. Das unbeflockte Filterpapier (Kurve 0) wird mit beflocktem Luftfilterpapier verglichen, das auf der Siebseite (16 in Fig. 2 ) Polyamidfasern von einheitlicher Stärke, nämlich 3,3 dtex, mit den unterschiedlichen Längen von 0,75 mm (Kurve 1); 1,0 mm (Kurve 2) und 1,4 mm (Kurve 3) trägt. Es ist deutlich, daß größere Faserlängen die Standzeit beträchtlich erhöhen. Allerdings können weitergehende Überlappungen bei noch größeren Faserlängen die Staubaufnahme beeinträchtigen.

Das gleiche Luftfilterpapier liefert bei Beflockung mit dickeren Polyamidfasern der Feinheit 6,7 dtex vergleichbare Ergebnisse (Fig. 6). Die Faserlänge von 1,5 mm (Kurve 2) führt zu deutlich besserer Standzeit als die Faserlänge 1,0 mm (Kurve 1).

Aus Fig. 7 geht der Einfluß des Faserdurchmessers auf die Standzeit des Filtermediums 10 hervor. Beflockt wurde jeweils die Siebseite 16 mit Polyamidfasern von 1,0 mm Länge bei Faserstärken von 3,3 dtex (Kurve 2) bzw. 6,7 dtex (Kurve 1). Man erkennt, daß das effektivere Filtermedium mit dünneren Fasern 24 beflockt ist.

Wesentliche Vorteile der Erfindung beruhen auf der Wirkung dünner Fasern 24, die in gleichmäßigem Raster auf Flockinseln 22 räumlich so verteilt sind, daß eine begrenzte Überlappung benachbarter Flockinseln gewährleistet ist. Je nach dem benutzten Träger 12 können sich weitere Effekte ergeben. Hat dieser etwa wie im Beispiel der Fig. 8 die Form eines Faltenbalges 30, so sorgt der Flock 20 für eine Lockerung des Schmutzkuchens in den Hohlkehlen 32, indem eine günstige Umlenkung einer zu filternden Strömung etwa tangential in die Falten hinein erfolgt. Dadurch wird vermieden, daß sich die Innenräume zuerst bzw. besonders stark dichtsetzen, wie das bei herkömmlichen Faltenbalg-Filtern der Fall ist. Vielmehr gibt es erfindungsgemäß eine Art Längsspüleffekt, der zusätzlich zu der von schwingenden Fasern 24 bewirkten Lockerung einen extremen Schmutzstau in den Hohlkehlen 32 verhindert.

Die Erfindung ist nicht auf die dargestellten Ausführungsformen beschränkt. Sie ist insbesondere auch bei Filterelementen herkömmlicher Art anwendbar, die nachträglich erfindungsgemäß beflockt werden. Auch die Beflockungsmuster bzw. -raster und die benutzten Flockfasern können in den verschiedensten Varianten eingesetzt werden.

Eine wichtige Gestaltung sieht ein Filtermedium 10 mit einem porösen Träger 12 vorgegebener Gestalt vor, der mit Flockinseln 22 nach einem Raster (Fig. 1, 3) derart beschichtet ist, daß sich Fasern 24 benachbarter Flockinseln noch überlappen, zwischen letzteren jedoch nicht oder wenig beflockte Trägerflächen 26 vorhanden sind. Der Träger 12 kann ein Filterpapier, Filtervlies oder Gewebe sein. Die Flockinseln 22 haben igelähnlichen Aufbau, so daß die Fasern 24 von einer erhabenen Kleberfläche 28 in Raumwinkel-Verteilung abstehen, insbesondere etwa radial zu einer Kugelkalotte. Das Raster der Flockinseln 22 kann von sich kreuzenden Scharen abstandsgleicher Linien gebildet sein, z. B. von sich rechtwinkelig schneidenden Parallelen. Die Flockfasern 24 bestehen aus weichelastischem Material wie Zellwolle oder Kunststoff, z.B. Polyamid, Polypropylen oder Polyethylenterephthalat, wobei die Faserstärke insbesondere zwischen 1 dtex und 7 dtex sowie die Faserlänge $\ell$ namentlich zwischen 0,5 mm und 1,5 mm liegt. Der Mittenabstand a der Flockinseln 22 voneinander beträgt das 1,2- bis 2,0-fache ihres mittleren Kerndurchmessers d, bevorzugt das etwa 1,5-fache.

## Patentansprüche

1.  Filtermedium (10) zur verfahrenstechnischen Filtration mit einem porösen Substrat vorgegebener Abscheideleistung, nämlich einem porösen Träger (12) vorgegebener Gestalt, der mit einem Flock (20) beschichtet ist und ein Hauptfilter bildet, dem der Flock (20) anströmseitig als Vorfilter vorgeordnet ist, wobei der Träger (12) mit Flockinseln (22) nach einem Raster (Fig. 1, 3) derart beschichtet ist, daß sich Fasern (24) benachbarter Flockinseln noch überlappen, zwischen letzteren jedoch nicht oder wenig beflockte Trägerflächen (26) vorhanden sind.

2.  Filtermedium nach Anspruch 1, dadurch **gekennzeichnet**, daß der Träger (12) ein Filterpapier, Filtervlies oder Gewebe ist.

3.  Filtermedium nach Anspruch 1 oder 2, dadurch **gekennzeichnet**, daß der Mittenabstand (a) der Flockinseln (22) voneinander im Bereich von 0,8 mm bis 5,5 mm liegt.

4.  Filtermedium nach einem der Ansprüche 1 bis 3, dadurch **gekennzeichnet**, daß der mittlere Kerndurchmesser (d) der Flockinseln (22) im Bereich von 0,1 mm bis 8 mm liegt, bevorzugt zwischen 0,3 mm und 2,5 mm, z.B. bei 1,5 mm.

5.  Filtermedium nach einem der Ansprüche 1 bis 4, dadurch **gekennzeichnet**, daß die Flock-Faserstärke im Bereich von 0,5 dtex bis 10 dtex liegt, insbesondere zwischen 2 dtex und 7 dtex.

6. Filtermedium nach wenigstens einem der Ansprüche 1 bis 5, dadurch **gekennzeichnet**, daß die Flock-Faserlänge (ℓ) im Bereich von 0,3 mm bis 3,0 mm liegt, namentlich zwischen 0,5 mm und 1,5 mm.

7. Filtermedium nach einem der Ansprüche 1 bis 6, dadurch **gekennzeichnet**, daß der Mittenabstand (a) der Flockinseln (22) voneinander begrenzt ist durch die Summe ihres Durchmessers (d) und der doppelten Faserlänge (ℓ), wobei er bevorzugt etwa das 1,2- bis 1,5-fache ihres mittleren Durchmessers (d) beträgt.

8. Filtermedium insbesondere nach einem der Ansprüche 1 bis 7, dadurch **gekennzeichnet**, daß die Flockinseln (22) einen igelähnlichen Aufbau haben, so daß die Fasern (24) von einer erhabenen Kleberfläche (28) in Raumwinkel-Verteilung abstehen.

9. Filtermedium nach Anspruch 8, dadurch **gekennzeichnet**, daß die erhabene Kleberfläche die Grundgestalt einer Kugelkalotte hat, von der die Fasern (24) im wesentlichen radial abstehen.

10. Fasermedium nach wenigstens einem der Ansprüche 1 bis 9, dadurch **gekennzeichnet**, daß das Raster (Fig. 1, 3) der Flockinseln (22) von sich kreuzenden Scharen abstandsgleicher Linien gebildet ist, insbesondere von sich rechtwinkelig schneidenden Parallelen.

11. Filtermedium nach wenigstens einem der Ansprüche 1 bis 10, dadurch **gekennzeichnet**, daß die Flock-Fasern (24) aus weichelastischem Material bestehen, z.B. aus Zellwolle oder Kunststoff wie Polyamid, Polypropylen oder Polyethylenterephthalat.

## Claims

1. A filter medium (10) for process-technological filtration using a porous substrate of given shape, that is coated by a flock (20) and that forms a main filter which is preceded at the flow-exposed side by the flock (20) acting as a prefilter, wherein the support (12) is coated with an array (Figs. 1, 3) of flock islands (22) such that fibres (24) of neighboring flock islands still overlap but that between the latter, there are support areas (26) bearing little or no flock.

2. Filter medium according to claim 1, wherein the support (12) is of filtering paper, filtering fleece or tissue.

3. Filter medium according to claim 1 or claim 2, wherein the flock islands (22) are spaced by center distances (a) ranging from 0.8 mm to 5.5 mm

4. Filter medium according to any one of claims 1 to 3, wherein the average care diameter (d) of the flock islands (22) is within a range of 0.1 mm to 8 mm and more specifically between 0.3 mm and 2.5 mm, preferably around 1.5 mm.

5. Filter medium according to any one of claims 1 to 4, wherein the flock fibre size ranges from 0.5 dtex to 10 dtex, in particular from 2 dtex to 7 dtex.

6. Filter medium according to any one claims 1 to 5, wherein the flock fibre length (ℓ) ranges from 0.3 mm to 3.0 mm, in particular from 0.5 mm to 1.5 mm.

7. Filter medium according to any one of claims 1 to 6, wherein the flock islands (22) are spaced by center distances (a) defined by the sum of the respective island diameter (d) and twice the fibre length (ℓ), preferably such that the center distance (a) equals the product of the average diameter (d) multiplied by a factor of 1.2 to 1.5.

8. Filter medium in porticular according to any one of claims 1 to 7, wherein the flock islands (22) form a porcupine-like barbed structure so that the fibres (24) extend from a convex adhesive area (28) in a solid angle distribution.

9. Filter medium according to claim 8, wherein the convex adhesive area (28) is basically shaped like a calotte shell from which the fibres (24) project substantially in radial directions.

10. Filter medium according to at least one of claims 1 to 9, wherein the array (Figs. 1, 3) of flock islands (22) is formed by intersecting families of uniformly spaced lines, in particular by parallel lines intersecting each other at a right angle.

11. Filter medium according to at least one of claims 1 to 10, wherein the flock fibres (24) consist of soft flexible material, e.g. of viscose staple hair or of plastics such as polyamide, polypropylene or polyethyleneterephthalate.

**Revendications**

1. Milieu filtrant (10) pour une filtration technologique avec un substrat poreux d'une capacité de séparation donnée, c'est-à-dire un support poreux (12) de forme donnée, recouvert d'un floc (20) et formant un filtre principal, en amont duquel le floc (20) est disposé du côté d'affluence comme premier filtre, et qu'en même temps le support (12) est recouvert d'îlots de floc (22) selon un quadrillage (fig. 1, 3), de manière à ce que les fibres (24) des îlots de floc voisins se recouvrent encore, mais qu'il y a entre ces derniers des surfaces de support non ou peu couvertes de floc.

2. Milieu filtrant selon la revendication 1, caractérisé en ce que le support (12) est un papier filtre, une toison filtre ou un tissu.

3. Milieu filtrant selon la revendication 1 ou 2, caractérisé en ce que la (distance (a) entre les centres des îlots de floc (22) se situe entre 0,8 mm et 5,5 mm.

4. Milieu filtrant selon une des revendications 1 à 3, caractérisé en ce que le diamètre moyen de noyau (d) des îlots de floc (22) se situe entre 0,1 mm et 8 mm, de préférence entre 0,3 mm et 2,5 mm, par exemple à 1,5 mm.

5. Milieu filtrant selon une des revendications 1 à 4, caractérisé en ce que l'épaisseur des fibres de floc se situe entre 0,5 dtex et 10 dtex, et surtout entre 2 dtex et 7 dtex.

6. Milieu filtrant selon au moins une des revendications 1 à 5, caractérisé en ce que la longueur (ℓ) des fibres de floc se situe entre 0,3 mm et 3,0 mm, notamment entre 0,5 mm et 1,5 mm.

7. Milieu filtrant selon une des revendications 1 à 6, caractérisé et ce que la distance (a) entre les centres des îlots de floc (22) est limitée par la somme de leur diamètre (d) et la double longueur (ℓ) des fibres et qu'elle est de préférence 1,2 à 1,5 fois plus grande que son diamètre moyen (d).

8. Milieu filtrant selon notamment une des revendications 1 à 7, caractérisé en ce que les îlots de floc (22) ont une structure ressemblant à un hérisson, de telle manière que les fibres (24) sont érigées sur une surface adhésive bosselée (28) en une distribution par angles solides.

9. Milieu filtrant selon la revendication 8, caractérisé en ce que la surface adhésive bosselée a la forme de base d'une calotte sphérique, de laquelle les fibres (24) sont érigées surtout radialement.

10. Milieu de fibres selon au moins une des revendications 1 à 9, caractérisé en ce que le quadrillage (fig. 1, 3) des îlots de floc (22) est formé de familles de lignes équidistantes qui s'entrecroisent, et notamment de parallèles qui se coupent perpendiculairement.

11. Milieu filtrant selon au moins une des revendications 1 à 10, caractérisé en ce que les fibres de floc (24) sont constituées d'un matériau souple, par exemple de laine de cellulose ou de matière plastique telle que le polyamide, le polypropylène ou le polyéthylène-téréphthalate.

Fig. 1

Fig. 2

Fig. 3

Fig. 4

Differenzdruck [mbar]

Zeit [min]

## Fig. 5

## Fig. 6

## Fig. 7

## Fig. 8